Europäisches Patentamt

European Patent Office

Office européen des brevets

(11) Numéro de publication: **0 181 823**
**A1**

(12) # DEMANDE DE BREVET EUROPEEN

(21) Numéro de dépôt: **85402204.3**

(22) Date de dépôt: **14.11.85**

(51) Int. Cl.⁴: **F 16 H 55/56**

(30) Priorité: **15.11.84 FR 8417437**

(43) Date de publication de la demande:
**21.05.86 Bulletin 86/21**

(84) Etats contractants désignés:
**DE FR GB IT**

(71) Demandeur: **VALEO**
**64 Avenue de la Grande Armée**
**F-75017 Paris(FR)**

(72) Inventeur: **Thirion de Briel, Jacques**
**83 Rue du Président Wilson**
**F-92300 Levallois-Perre(FR)**

(72) Inventeur: **Jaccod, Michel**
**68 Rue de la Mézy**
**F-94500 Champigny-sur-Marne(FR)**

(74) Mandataire: **CABINET BONNET-THIRION**
**95 Boulevard Beaumarchais**
**F-75003 Paris(FR)**

(54) **Poulie de variateur de vitesse à joint d'étanchéité autour du moyeu.**

(57) Il s'agit d'une poulie de variateur à laquelle il est associé une chambre de pilotage (38A) destinée à être raccordée à une source de fluide, l'étanchéité de cette chambre de pilotage (38A) étant notamment assurée par un joint d'étanchéité (45) qui, lié axialement au flasque mobile (15A), est disposé à l'aplomb d'une entretoise de butée (44) définissant par ailleurs l'une des positions extrêmes de ce flasque mobile (15A).

Suivant l'invention, l'entretoise de butée (44) est portée par la douille (18A) du flasque mobile (15A) du côté de celle-ci tournée vers l'autre flasque (16B), elle présente transversalement une collerette (46), qui est dirigée radialement vers l'axe de l'ensemble, et par laquelle elle délimite, pour sa part, un logement (47) dans lequel est disposé le joint d'étanchéité (45) associé, et, conjointement, des passages (50, 49) sont prévus globalement radialement dans ladite douille (18A) et le moyeu (12A) de l'ensemble.

Application notamment aux poulies de variateur de vitesse pour véhicules automobiles.

EP 0 181 823 A1

FIG.1

10B

11  33A  31A  27A
15A  24A  26A
16A  28A  10A

II  44  18A  32A  30A
17A  50
46  19A  55
45  14A
42A  19A  12A
49  13A
40A

41  32  38A

"Poulie de variateur de vitesse à joint
d'étanchéité autour du moyeu"

La présente invention concerne d'une manière générale les variateurs de vitesse.

Il s'agit, par exemple, de ceux susceptibles d'être mis en oeuvre sur un véhicule automobile pour l'entraînement, à partir du moteur de celui-ci, d'un quelconque organe auxiliaire, tel qu'alternateur, pompe à eau, compresseur ou ventilateur.

Ainsi qu'on le sait, chacune des deux poulies, l'une menante, l'autre menée, que comporte un tel variateur de vitesse présente un moyeu, et, en regard l'un de l'autre, autour dudit moyeu, pour réception d'une courroie, deux flasques annulaires, dont un au moins, dit ici par simple commodité flasque mobile, est monté mobile axialement par rapport audit moyeu, en étant, pour ce faire, solidaire axialement d'une douille engagée à coulissement sur celui-ci, avec, le plus souvent, interposés entre ladite douille et ledit moyeu, deux coussinets en matériau anti-friction axialement écartés l'un de l'autre.

En pratique, ce flasque mobile peut ainsi se déplacer axialement entre deux positions extrêmes, l'une avancée, l'autre reculée, par rapport à l'autre flasque, dit ici par simple commodité flasque fixe, auquel il est associé, étant entendu que, lorsque le flasque mobile de la poulie menante est en position avancée, le flasque mobile de la poulie menée est en position reculée, et réciproquement, la courroie correspondante occupant à chaque fois une position déterminée à laquelle correspond elle-même un rapport de transmission déterminé.

Pour qu'aux figurations extrêmes de l'ensemble correspondent des rapports de transmission bien précis, il importe que les positions extrêmes, avancée ou reculée, du flasque mobile des deux poulies soient elles-mêmes bien déterminées.

Il est usuellement prévu pour ce faire d'associer au flasque mobile de l'une au moins de ces poulies, et par exemple de la poulie menante, des moyens de butée propres à en limiter de manière déterminée le déplacement axial, tant dans un sens que dans l'autre.

La présente invention vise plus particulièrement le cas où, par ailleurs, pour le contrôle à tout instant de la configuration de l'ensemble, il est associé, à l'une au moins des poulies, et, par exemple, à sa poulie menante, une chambre de pilotage destinée à être raccordée à une source de fluide appropriée, telle qu'une source de fluide pneumatique en pression ou dépression.

C'est le cas, par exemple, dans la demande de brevet français déposée le 16 Mai 1983 sous le No 83 08047.

En pratique, dans celle-ci, il est tiré profit du fait que les moyens de rappel élastiques associés par ailleurs au flasque mobile de la poulie menante, par exemple, comportent une pièce annulaire à conicité variable, communément dite diaphragme, pour constituer une telle chambre de pilotage entre, d'une part, cette pièce annulaire, qui porte sur le flasque mobile en prenant appui sur une pièce d'appui solidaire du moyeu, et, d'autre part, ledit flasque mobile et ledit moyeu, ladite pièce annulaire et ses appuis sur le flasque mobile et la pièce d'appui étant convenablement rendus étanches à cet effet, et ledit moyeu comportant par ailleurs un évidement interne et au moins un passage par lesquels la chambre de pilotage ainsi constituée peut être reliée à la source de fluide concernée.

Conjointement, l'étanchéité entre le flasque mobile et le moyeu se trouve assurée par un joint d'étanchéité, qui, disposé, dans la chambre de pilotage, autour dudit moyeu, est ancré dans une gorge de la douille que comporte ledit flasque mobile, et est ainsi lié en mouvement à celui-ci.

Corollairement, dans cette demande de brevet français, les moyens de butée associés au flasque mobile de la poulie menante pour en définir les positions avancée et reculée se trouvent constitués, d'une part, pour la position avancée, par la douille même de ce flasque mobile, celle-ci étant suffisamment prolongée à cet effet en direction du flasque fixe correspondant pour pouvoir venir porter par sa tranche sur ce dernier, et, d'autre part, pour la position reculée, par une entretoise, ou entretoise de butée, qui, constituant une pièce annulaire rapportée à cet effet sur ce flasque mobile, coaxialement par rapport à sa douille, autour de celle-ci, est, elle, apte à venir porter par sa tranche sur la pièce d'appui associée.

C'est en pratique à l'aplomb de cette entretoise de butée que se trouve disposé le joint d'étanchéité enserrant par ailleurs le moyeu.

C'est donc du côté de la pièce d'appui correspondant à la position reculée, ou de butée arrière, du flasque mobile, qu'est disposé, dans un tel cas, un tel joint d'étanchéité, dans la chambre de pilotage.

Ces dispositions ont donné et peuvent encore donner satisfaction.

Mais elles présentent divers inconvénients, qui sont les suivants.

Tout d'abord, pour l'ancrage du joint d'étanchéité, qui, dans la demande de brevet français No 83 08047, est en pratique un joint à lèvre, il est nécessaire de ménager une gorge dans la douille du flasque mobile.

Il faut pour cela une opération d'usinage particulière, relativement délicate et coûteuse, et celle-ci conduit à un amoindrissement local de la résistance mécanique de la douille qu'il faut compenser par avance en donnant à celle-ci une épaisseur appropriée, mais redondante par ailleurs.

Il en est de même si l'on substitue à un joint à lèvre un joint classique, celui-ci devant lui aussi être logé dans une gorge de la douille.

Dans l'un et l'autre cas, l'accroissement nécessaire de l'épaisseur de la douille se fait naturellement au détriment de l'encombrement diamétral de l'ensemble.

De plus, l'entretoise de butée, qui s'étend dans ce cas à l'intérieur de la chambre de pilotage, occupe dans celle-ci un emplacement non négligeable rendant difficile l'implantation, fréquemment nécessaire, d'un ressort de rappel supplémentaire pour le flasque mobile.

En outre, l'implantation du joint d'étanchéité du côté de la plaque d'appui conduit à disposer également du côté de celle-ci, au voisinage de cette plaque d'appui, le débouché des passages prévus dans le moyeu pour la desserte de la chambre de pilotage, et, au moins pour certaines applications, la présence à cet endroit de ces passages peut elle-même être à l'origine d'une gêne, notamment lorsque l'arbre sur lequel ce moyeu est rapporté doit s'engager axialement plus ou moins profondément dans celui-ci.

Enfin, le passage à ménager dans le moyeu pour communication de son évidement interne avec la chambre de pilotage associée présente quasi nécessairement un tronçon axial et un tronçon radial, ce qui en complique la réalisation, et conjointement, la douille du flasque mobile est à ajourer à son extrémité.

La présente invention a d'une manière générale pour objet une disposition permettant d'éviter ces inconvénients et conduisant en outre à d'autres avantages.

De manière plus précise, elle a pour objet une poulie de variateur de vitesse du genre comportant un moyeu, qui présente un évidement interne, et, en regard l'un de l'autre, autour dudit moyeu, deux flasques annulaires, dont un au moins, dit ici par simple commodité flasque mobile, est monté mobile axialement par rapport audit moyeu en étant pour ce faire solidaire axialement d'une douille engagée à coulissement sur celui-ci, avec, interposés entre ladite douille et ledit moyeu, deux coussinets en matériau anti-friction axialement écartés l'un de l'autre, en association avec une entretoise, dite ici par simple commodité entretoise de butée, qui, également solidaire axialement du flasque mobile, est propre à en limiter le déplacement axial dans un sens, et en association avec une chambre de pilotage, qui, destinée à être raccordée à une source de fluide, est au moins pour partie définie par le flasque mobile, le moyeu, et un joint d'étanchéité disposé autour dudit moyeu à l'aplomb de ladite entretoise de butée et lié en mouvement audit flasque mobile, cette poulie de variateur étant caractérisée, en combinaison, d'une part, en ce que l'entretoise de butée est portée par l'extrémité de la douille du flasque mobile dirigée vers le flasque fixe, et elle présente, transversalement, une collerette qui est dirigée radialement vers l'axe de l'ensemble, et par laquelle elle délimite, pour sa part, un logement dans lequel est disposé le joint d'étanchéité associé, et, d'autre part, en ce que, pour raccordement de la chambre de pilotage à une source de fluide, il est prévu, dans la douille, entre les coussinets en matériau anti-friction, au moins un passage, et, dans le moyeu, également entre lesdits coussinets en matériau anti-friction, pour communication de l'évidement interne de ce moyeu avec le volume délimité par les coussinets en matériau anti-friction entre lui et la douille, au moins un passage.

Ainsi, suivant une disposition exactement inverse de celle décrite dans la demande de brevet français mentionnée ci-dessus, c'est l'entretoise de butée suivant l'invention qui définit la position avancée du flasque mobile, cependant que la douille de celui-ci en définit la position reculée.

Quoi qu'il en soit, pour lier axialement le joint d'étanchéité au moyeu, il n'est pas besoin, suivant l'invention, de prévoir pour lui une quelconque gorge dans la douille de celui-ci.

En outre, l'entretoise de butée suivant l'invention est avantageusement portée par la douille du flasque mobile, au lieu d'être portée par celui-ci.

Il en résulte, notamment, une minimisation de son encombrement, et, plus particulièrement, une libération de la place nécessaire à l'implantation d'un ressort de rappel supplémentaire, lorsque la mise en oeuvre d'un tel ressort de rappel supplémentaire est souhaitable.

De plus, le passage à ménager dans le moyeu pour communication de son évidement interne avec la chambre de pilotage associée peut avantageusement ne comporter qu'un seul tronçon, ce qui en simplifie la réalisation, et celui à prévoir conjointement dans la douille du flasque mobile peut avantageusement être ménagé globalement radialement dans celle-ci, au lieu que cette douille soit ajourée à son extrémité, ce qui en simplifie également la réalisation.

Enfin, pour être rapportée sur la douille du flasque mobile, l'entretoise de butée peut très simplement être, soit engagée, par exemple à plein diamètre, sur cette douille, soit être engagée, par exemple par un tronçon de diamètre réduit, dans celle-ci.

Dans l'un et l'autre cas, il peut être tiré profit d'un tel engagement pour assurer, au montage, une mise sous contrainte axiale du joint d'étanchéité dans son logement, ce qui est favorable à l'étanchéité recherchée.

En pratique, la collerette de l'entretoise de butée s'étend de préférence à l'extrémité libre de celle-ci, en sorte qu'elle constitue par elle-même la portion de cette entretoise de butée par laquelle celle-ci est adaptée à limiter dans un sens le déplacement axial du flasque mobile.

Cette collerette peut par exemple être constituée par un simple bord tombé de l'entretoise de butée.

Elle peut également être constituée par un bord tombé doublé en surface par un repli sur lui-même, en direction opposée à l'axe de l'ensemble, de ce bord tombé.

Dans l'un et l'autre cas, un tel bord tombé se prête avantageusement à recevoir un revêtement anti-friction, pour minimiser les risques d'usure et d'incrustation qu'encourent les portées de butée correspondant au sens axial considéré lors des flexions rotatives dont est inévitablement l'objet en service le flasque mobile du fait de son jeu radial de montage par rapport au moyeu.

Ainsi, suivant l'invention, c'est avantageusement très simplement l'entretoise de butée qui porte ce revêtement anti-friction.

Certes, dans le document US-A-2.952.161, il est décrit une poulie de variateur sur la douille de chacun des flasques de laquelle, il est rapporté, en bout d'une telle douille, une entretoise de butée définissant avec cette douille un logement dans lequel est disposé un joint d'étanchéité.

Mais il s'agit en pratique d'une poulie de variateur de configuration différente de celle concernée ici, les deux flasques de cette poulie de variateur étant l'un et l'autre mobiles, avec des douilles massives, sans passage à travers ces douilles, ni chambre de pilotage.

Les caractéristiques et avantages de l'invention ressortiront d'ailleurs de la description qui va suivre, à titre d'exemple, en référence aux dessins schématiques annexés sur lesquels :

la figure 1 est une vue en coupe axiale d'un variateur de vitesse mettant en oeuvre une poulie suivant l'invention ;

la figure 2 reprend, à échelle supérieure, le détail de la figure 1 repéré par un encart II sur celle-ci ;

les figures 3 à 5 sont des vues analogues à celle de la figure 2 et concernent chacune respectivement une variante de réalisation.

Sur ces figures, on reconnaît un variateur de vitesse du type de celui décrit dans la demande de brevet français No 83.08047 mentionnée ci-dessus.

Il comporte une poulie menante 10A, une poulie menée 10B, et une courroie 11 passée en boucle sans fin sur celles-ci.

La poulie menante 10A comporte un moyeu 12A, qui, par exemple, et tel que représenté, est rapporté par une vis 13A en bout d'un quelconque arbre d'entraînement 14A, en étant ainsi solidarisé en rotation à celui-ci, et, en regard l'un de l'autre, autour dudit moyeu 12A, pour la réception de la courroie 11, deux flasques annulaires 15A, 16A, à flanc tronconique, dont un au moins, en pratique le flasque 15A, dit ici par simple commodité flasque mobile, est monté mobile axialement par rapport au moyeu 12A.

En pratique, seul le flasque 15A est ainsi mobile par rapport au moyeu 12A, le flasque 16A associé, dit ici par simple commodité flasque fixe, étant lui solidaire, tant axialement qu'en rotation, du moyeu 12A, en étant par exemple serti à cet effet, par sa périphérie interne, en bout dudit moyeu 12A, tel que représenté.

Pour sa mobilité sur le moyeu 12A, le flasque mobile 15A est solidaire axialement d'une douille 18A engagée à coulissement sur ce moyeu 12A.

En pratique, dans la forme de réalisation représentée, le flasque mobile 15A présente, à cet effet, dans sa zone centrale, une collerette axiale 17A, qui s'étend en direction opposée au flasque fixe 16A, et par laquelle il est rapporté, par exemple par simple engagement à force, ou par soudage, sur ladite douille 18A, et, entre celle-ci et le moyeu 10A, sont interposés deux coussinets en matériau anti-friction 19A, qui sont convenablement écartés axialement l'un de l'autre, et qui, par exemple, et tel que représenté, sont disposés chacun respectivement aux deux extrémités de cette douille 18A.

En pratique, le flasque mobile 15A est d'un seul tenant avec sa collerette axiale 17A, et, à sa périphérie, il présente, dans le même sens que celle-ci, et également d'un seul tenant, un rebord axial 24A.

Le flasque mobile 15A ainsi constitué est en permanence sollicité en direction du flasque fixe 16A par des moyens élastiques de rappel à action axiale.

Dans la forme de réalisation représentée, ceux-ci comportent, d'une part, une pièce annulaire à conicité variable 26A, dite diaphragme, qui, par une partie périphérique 27A formant rondelle Belleville, est en appui axial basculant contre le flasque mobile 15A, et plus précisément contre la tranche du rebord axial 24A de celui-ci, et qui, par une partie centrale 28A fragmentée en doigts radiaux, est en appui axial basculant contre une pièce 30A, dite ici par simple commodité pièce d'appui, solidaire axialement, et circonférentiellement dans la forme

9 0181823

de réalisation représentée, du moyeu 12A, et, d'autre part, établi coaxialement autour de la collerette axiale 17A de ce flasque mobile 15A, un ressort 32, du type ressort à boudin, qui, prenant lui aussi appui sur la pièce d'appui 30A, porte sur la surface interne du flasque mobile 15A, au raccordement du flanc tronconique de celui-ci avec sa collerette axiale 17A.

Les appuis basculants du diaphragme 26A sur le flasque mobile 15A et sur la pièce d'appui 30A se font par l'intermédiaire d'entretoises en matière élastique, respectivement 31A, 32A, et celles-ci sont d'un seul tenant avec une masse en matière élastique, et par exemple une masse caoutchouteuse, enrobant dans sa totalité cette pièce annulaire 26A.

En pratique, l'entretoise annulaire 31A, qui appartient donc à cette masse en matière élastique, se trouve adhérisée à une pièce de liaison 33A, par exemple métallique, par laquelle l'ensemble est solidarisé au moins axialement, et en pratique tant axialement que circonférentiellement, par exemple par soudage, au rebord axial 24A du flasque mobile 15A, et, de même, l'entretoise annulaire 32A est adhérisée à la pièce d'appui 30A.

Une chambre 38A, ou chambre de pilotage, se trouve ainsi définie entre le flasque mobile 15A, le moyeu 12A, et l'ensemble constitué par la pièce annulaire 26A, ses revêtements en matière élastique, les entretoises annulaires 31A, 32A, et la pièce d'appui 30A, ladite pièce annulaire 26A se trouvant enrobée dans la masse en matière élastique correspondante, comme indiqué ci-dessus.

Cette chambre de pilotage 38A est destinée à être raccordée à une source de fluide, et en particulier à une source de fluide pneumatique, en pression ou dépression.

Pour ce faire, elle communique, par des passages décrits ci-après, avec un évidement interne 40A du moyeu 10A, et celui-ci est lui-même adapté à être raccordé, de manière étanche, par un embout 42A, à la source de fluide concernée.

Ces dispositions sont bien connues par elles-mêmes, notamment par la demande de brevet français No 83.08047, et elles ne seront donc pas décrites plus en détail ici.

De manière également connue en soi, des moyens de butée sont associés au flasque mobile 15A pour en définir les positions extrêmes avancée et reculée, et il s'agit, pour un premier sens axial, de la douille 18A dont il est axialement solidaire, et, pour le sens axial opposé, d'une entretoise annulaire 44, dite ici par simple commodité entretoise de butée, qui, solidaire axialement de ce flasque mobile 15A, est propre elle aussi à en limiter le déplacement axial, dans ledit sens opposé.

De manière connue en soi, enfin, il est prévu, pour parfaire l'étanchéité de la chambre de pilotage 30A, un joint d'étanchéité 45, qui, disposé autour du moyeu 12A avec serrage élastique de celui-ci, à l'aplomb de l'entretoise de butée 44, est lié en mouvement au flasque mobile 15A.

Suivant l'invention, et en combinaison, d'une part, l'entretoise de butée 44 est portée par la douille 18A, à l'extrémité de celle-ci dirigée vers le flasque fixe 16A, et elle présente, transversalement, une collerette 46, qui est dirigée radialement vers l'axe de l'ensemble, et par laquelle elle délimite, pour sa part, un logement 47 dans lequel est disposé le joint d'étanchéité 45, et, d'autre part, pour raccordement de la chambre de pilotage 38A à la source de fluide mise en oeuvre, il est prévu, dans la douille 18A, entre les coussinets en matériau anti-friction 19A, au moins un passage 50, qui est en pratique ménagé globalement radialement dans ladite douille 18A, et dans le moyeu 12A, également entre les coussinets en matériau anti-friction 19A, pour communication de l'évidement interne 40A de ce moyeu 12A avec le volume délimité par les coussinets en matériau anti-friction 19A entre lui et la douille 18A, au moins un passage 49.

Dans les formes de réalisation représentées, un tel passage 49 est lui aussi ménagé globalement radialement dans le moyeu 12A qu'il affecte, mais, en variante, il pourrait aussi bien s'étendre plus ou moins en biais si désiré.

Quoi qu'il en soit, il ne comporte avantageusement qu'un seul tronçon, rectiligne, et il est donc facile à réaliser.

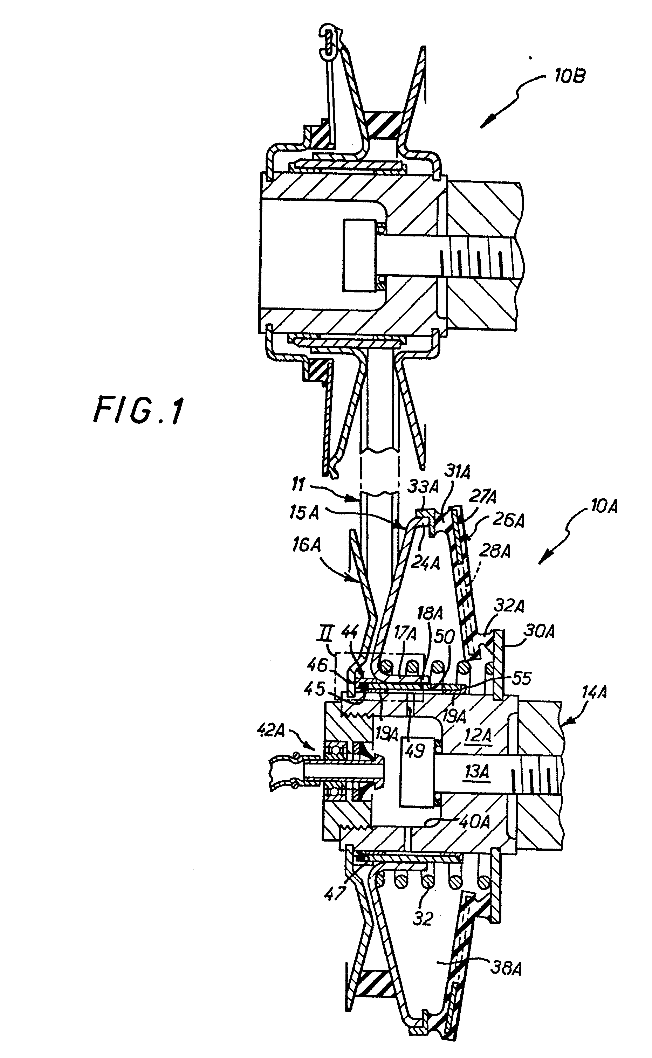

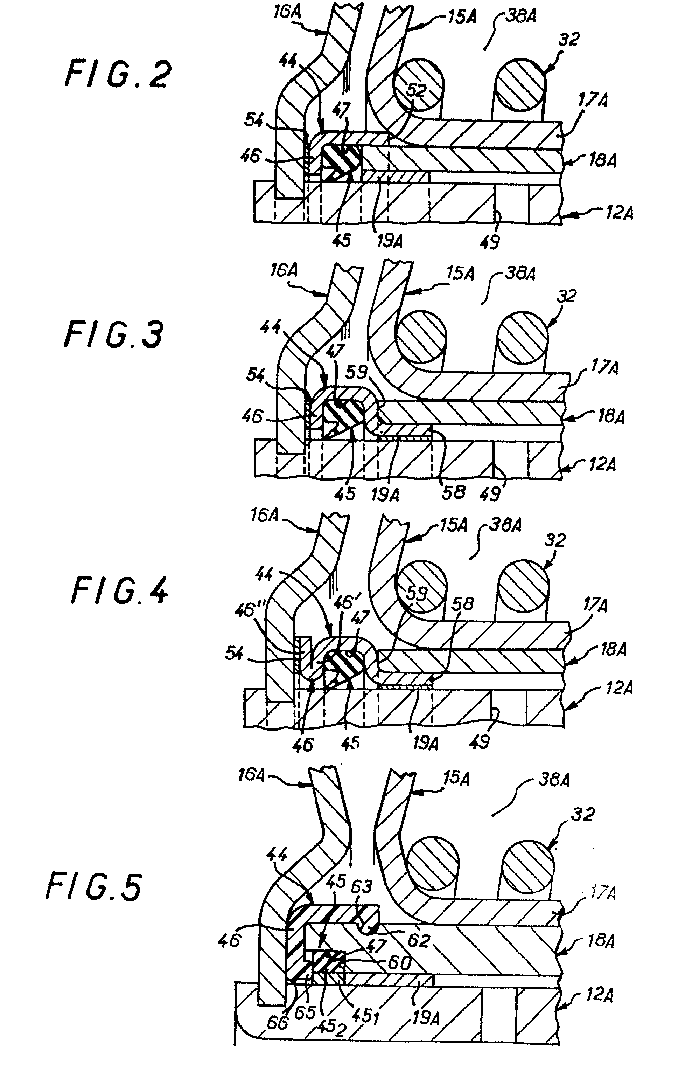

Dans la forme de réalisation plus particulièrement représentée sur les figures 1, 2, l'entretoise de butée 44 est engagée à plein diamètre sur la douille 18A, suivant, par exemple, un simple engagement à force.

Dans cette forme de réalisation, le logement 47 du joint d'étanchéité 45 se trouve donc délimité par la collerette 46, que présente à cet effet suivant l'invention l'entretoise de butée 44, le moyeu 12A et la douille 18A, et, plus précisément, la tranche d'extrémité correspondante de celle-ci.

Au montage, il peut avantageusement être tiré parti d'une telle disposition pour mettre sous contrainte le joint d'étanchéité 45.

Ainsi, suivant l'invention, ce joint d'étanchéité 45 est sous contrainte axiale dans son logement 47, entre, d'une part, la tranche d'extrémité correspondante de la douille 18A du flasque mobile 15A, et, d'autre part, la collerette 46 de l'entretoise de butée 44 rapportée sur ladite douille 18A.

Dans la forme de réalisation représentée, ce joint d'étanchéité 45 est un joint à lèvre, dont la lèvre porte sur le moyeu 12A.

Seul, donc, le corps de ce joint d'étanchéité 45, c'est-à-dire la partie de celui-ci sur laquelle fait saillie annulairement vers l'axe de l'ensemble la lèvre correspondante, est sous contrainte axiale dans le logement 47.

De préférence, et tel que représenté, par sa tranche 52 opposée à sa collerette 46, l'entretoise de butée 44 est au contact du flasque mobile 15A.

C'est donc elle qui définit la position avancée de ce flasque mobile 15A, par butée contre le flasque fixe 16A associé.

Quoi qu'il en soit, l'entretoise de butée 44 étant ainsi emmanchée sur la douille 18A du flasque mobile 15A entre celui-ci et le flasque fixe 16A, elle est sans incidence sur l'encombrement radial de l'ensemble.

En pratique, dans la forme de réalisation représentée, sa collerette 46 est constituée par un simple bord tombé, et c'est donc par cette collerette 46, et plus précisément par la surface externe de celle-ci, qu'elle est adaptée à venir en butée contre le flasque fixe 16A.

De préférence, et tel que représenté, pour contact avec le flasque fixe 16A, la collerette 46 porte, sur sa surface externe, un revêtement en matériau anti-friction 54.

Un tel revêtement en matériau anti-friction 54 peut par exemple être formé par projection d'une matière synthétique appropriée.

Tandis que l'entretoise de butée 34 est ainsi adaptée à définir la position avancée du flasque mobile 15A, la position reculée de celui-ci se trouve être définie par la douille 18A dont il est solidaire, par butée de cette douille contre la pièce d'appui 30A.

De préférence, et tel que représenté, pour contact avec la pièce d'appui 30A, la tranche correspondante de la douille 18A porte elle aussi un revêtement anti-friction 55, et, tel que représenté, celui-ci peut très simplement être d'un seul tenant avec le coussinet 19A correspondant.

Ainsi qu'on le notera, les revêtements en matériau anti-friction 54, 55 s'étendent ainsi transversalement, en bout, chacun dans le sens axial considéré, de l'équipage formé par le flasque mobile 15A, sa douille 18A, et l'entretoise de butée 44 rapportée sur celle-ci.

Dans la variante de réalisation représentée sur la figure 3, l'entretoise de butée 44 est engagée dans la douille 18A du flasque mobile 15A par un tronçon de diamètre réduit 58.

De préférence, et tel que représenté, c'est ce tronçon de diamètre réduit 58 de l'entretoise de butée 54 qui porte alors le coussinet en matériau anti-friction 19A correspondant.

En outre, et également tel que représenté, l'entretoise de butée 44 est au contact de la tranche correspondante de la douille 18A, par un épaulement transversal 59, formé par la surface externe de son tronçon radial raccordant à sa partie courante son tronçon de diamètre réduit 58.

Ainsi, et comme précédemment, c'est encore l'entretoise de butée 44 qui définit la position avancée du flasque mobile 15A.

Dans la forme de réalisation représentée, l'appui correspondant sur le flasque fixe 16A se fait encore par la collerette 46, et, comme précédemment, celle-ci est formée par un simple bord tombé.

En variante, figure 4, la collerette 46 de l'entretoise de butée 44 est constituée par un bord tombé 46' de celle-ci doublé en surface par un repli sur lui-même 46", en direction opposée à l'axe de l'ensemble, de ce bord tombé 46'.

Il en résulte un raidissement avantageux de la collerette 46 ainsi constituée.

En outre, dans un tel cas, le revêtement en matériau anti-friction 54 porté par celle-ci peut résulter d'un même processus de fabrication que le coussinet en matériau anti-friction 19A correspondant, en étant par exemple déposé par avance sur le flan dont est issue ensuite par formage l'entretoise de butée 44.

En effet, dans ce cas, le revêtement en matériau anti-friction 54 et le coussinet 19A correspondant affectent la même surface d'un tel flan.

Bien entendu, et comme précédemment, le joint d'étanchéité 45 est de préférence sous contrainte axiale dans son logement 47, bien que, abstraction faite du moyeu 12A, celui-ci soit alors défini dans sa totalité par la seule entretoise de butée 44.

Dans ce qui précède, et comme indiqué ci-dessus, le joint d'étanchéité 45 mis en oeuvre est un joint à lèvre,

14 0181823

parce que, en pratique, la chambre de pilotage 38A est destinée à être en dépression et qu'un tel joint à lèvre convient à une telle dépression, sa lèvre étant alors orientée en conséquence.

Mais, bien entendu, tout autre type de joint peut aussi convenir, et, notamment, un joint en deux parties radialement superposées, l'une, radialement la plus interne, à section rectangulaire, l'autre formant joint torique et ceinturant la première, un tel joint torique en deux parties pouvant aussi bien convenir à une pression qu'à une dépression.

Une telle possibilité est illustrée à la figure 5.

Par exemple, la partie radialement la plus interne $45_1$ du joint d'étanchéité 45 ainsi réalisée est en matériau anti-friction, et sa partie radialement la plus externe $45_2$ en élastomère.

Par ailleurs, dans la variante de réalisation représentée sur cette figure 5, le logement 47 de ce joint d'étanchéité 45 se trouve délimité par la collerette 46 de l'entretoise de butée 44, un évidement 60 de la tranche d'extrémité correspondante de la douille 18A sur laquelle est engagée celle-ci, et le moyeu 12A.

Dans un tel cas, et tel que représenté, l'entretoise de butée 44 est axialement en appui contre la portion restante 61 de ladite tranche de la douille 18A.

Dans la forme de réalisation représentée, l'entretoise de butée 44, qui s'apparente à celle décrite en référence aux figures 1, 2, est en matière synthétique.

Elle présente alors avantageusement, sur sa surface interne, une saillie 62, un bourrelet annulaire par exemple, par laquelle elle est en prise avec une gorge 63, d'amplitude radiale limitée, prévue pour elle sur la surface externe de la douille 18A.

Elle présente en outre, en saillie sur la surface interne de sa collerette 46, un bossage annulaire 65, pour mise sous contrainte axiale du joint d'étanchéité 45, et, en saillie sur la tranche de ladite collerette 46, un cordon annulaire 66, pour contact avec le moyeu 12A.

Mais, comme précédemment, elle peut aussi bien être métallique.

Dans ce cas, elle est engagée à force sur la douille 18A et ne comporte ni bossage 65 ni cordon 66.

On notera que, si, dans la forme de réalisation représentée sur la figure 5, il est ainsi ménagé une gorge 63 sur la douille 18A dans le cas où l'entretoise de butée 44 est encliquetée sur celle-ci, cette gorge 63, outre qu'elle est d'amplitude radiale limitée, et n'interfère donc pas sensiblement sur la résistance mécanique de cette douille 18A, intervient au droit d'un coussinet en matériau anti-friction 19A, et donc au droit d'un appui de ladite douille 18A sur le moyeu 12A, ce qui minimise encore avantageusement son incidence sur la résistance mécanique de celle-ci.

On notera en outre que, dans tous les cas, le joint d'étanchéité 45 s'étend axialement entre le flasque fixe 16A et le coussinet en matériau anti-friction 19A axialement le plus proche de celui-ci, en avant de ce coussinet en matériau anti-friction 19A, et que par conséquent, il s'oppose, par lui-même, de ce côté, à la pénétration d'un quelconque éventuel agent extérieur, tel que poussière, débris ou autre, sous ce coussinet en matériau anti-friction 19A aussi bien que dans le volume qu'il délimite avec l'autre, ce qui est avantageusement favorable à la pérennité de ces coussinets en matériau anti-friction 19A, alors même que, de l'autre côté, il résulte de la chambre de pilotage 38A une protection semblable.

On notera enfin que, par une conformation appropriée, qui, corollairement, conduit avantageusement à une bonne compacité axiale pour l'ensemble, le flasque fixe 16A ménage entre lui et le flasque fixe 15A un espace propre à un tel logement du joint d'étanchéité 45 et de l'entretoise de butée 44 entre lui et le coussinet en matériau anti-friction 19A axialement le plus proche.

Pour ce faire, le flasque fixe 16A présente en pratique, dans les formes de réalisation représentées, successivement à compter du moyeu 12A, un tronçon droit, sensiblement transversalement par rapport à l'axe de ce moyeu 12A, un tronçon qui, oblique vis-à-vis dudit axe, a sensiblement la même pente que celle du flasque mobile 15A, parallèlement à celui-ci, et un tronçon qui, lui aussi oblique sur ledit axe, a une pente inverse de celle du précédent.

La présente invention ne se limite d'ailleurs pas aux formes de réalisation décrites et représentées, mais englobe toute variante d'exécution et/ou de combinaison de leurs divers éléments.

Quant à la poulie menée 10B, il peut, ou non, lui être associé aussi une chambre de pilotage.

Dans la forme de réalisation représentée, il n'en est pas ainsi.

C'est la raison pour laquelle elle n'a pas été décrite ici.

Mais il va de soi que les dispositions décrites en référence à la poulie menante 10A peuvent tout aussi bien lui être appliquées.

## REVENDICATIONS

1. Poulie de variateur de vitesse, du genre comportant un moyeu (12A) qui présente un évidement interne (40A), et, en regard l'un de l'autre, autour dudit moyeu (12A), deux flasques annulaires (15A, 16A) dont un au moins, dit ici par simple commodité flasque mobile, est monté mobile axialement par rapport audit moyeu (12A) en étant pour ce faire solidaire axialement d'une douille (18A) engagée à coulissement sur celui-ci, avec, interposés entre ladite douille (18A) et ledit moyeu (12A), deux coussinets en matériau anti-friction (19A) axialement écartés l'un de l'autre, en association avec une entretoise (44), dite ici par simple commodité entretoise de butée, qui, également solidaire axialement du flasque mobile (15A), est propre à en limiter le déplacement axial dans un sens, et en association avec une chambre de pilotage (38A), qui, destinée à être raccordée à une source de fluide, est au moins pour partie définie par le flasque mobile (15A), le moyeu (12A), et un joint d'étanchéité (45) disposé autour dudit moyeu (12A) à l'aplomb de ladite entretoise de butée (44) et lié en mouvement audit flasque mobile (15A), caractérisée, en combinaison, d'une part, en ce que l'entretoise de butée (44) est portée par l'extrémité de la douille (18A) du flasque mobile (15A) dirigée vers le flasque fixe (16A), et elle présente, transversalement, une collerette (46) qui est dirigée radialement vers l'axe de l'ensemble, et par laquelle elle délimite, pour sa part, un logement (47) dans lequel est disposé le joint d'étanchéité (45) associé, et, d'autre part, en ce que, pour raccordement de la chambre de pilotage (38A) à une source de fluide, il est prévu, dans la douille (18A), entre les coussinets en matériau anti-friction (19A), au moins un passage (50), et, dans le moyeu (12A), également entre lesdits coussinets en matériau anti-friction (19A), pour communication de l'évidement interne (40A) de ce moyeu (12A) avec le volume délimité par les coussinets en matériau anti-friction (19A) entre lui et la douille (18A), au moins un passage (49).

2. Poulie de variateur suivant la revendication 1, caractérisée en ce que l'entretoise de butée (44) est engagée sur la douille (18A) du flasque mobile (15A).

3. Poulie de variateur suivant la revendication 2, caractérisée en ce que l'entretoise de butée (44) est, par sa tranche, au contact du flasque mobile (15A).

4. Poulie de variateur suivant la revendication 2, caractérisée en ce que, par une saillie sur sa surface interne, l'entretoise de butée (44) est en prise avec une gorge prévue à cet effet sur la surface externe de la douille (18A).

5. Poulie de variateur suivant l'une quelconque des revendications 2 à 4, caractérisée en ce que le logement (47) du joint d'étanchéité (45) se trouve délimité par la collerette (46) de l'entretoise de butée (44), la tranche d'extrémité correspondante de la douille (18A) sur laquelle elle est engagée, et le moyeu (12A).

6. Poulie de variateur suivant l'une quelconque des revendications 2 à 4, caractérisée en ce que le logement (47) du joint d'étanchéité (45) se trouve délimité par la collerette (46) de l'entretoise de butée (44), un évidement (60) de la tranche d'extrémité correspondante de la douille (18A) sur laquelle elle est engagée, et le moyeu (12A), et, par ladite collerette (46), l'entretoise de butée (44) est axialement en appui contre la portion restante (61) de ladite tranche de la douille (18A).

7. Poulie de variateur suivant la revendication 1, caractérisée en ce que, par un tronçon de diamètre réduit (58), l'entretoise de butée (44) est engagée dans la douille (18A) du flasque mobile (15A).

8. Poulie de variateur suivant la revendication 7, caractérisée en ce que, un coussinet en matériau anti-friction (19A) étant radialement prévu entre la douille (18A) du flasque mobile (15A) et le moyeu (12A), ledit coussinet en matériau anti-friction (19A) est porté par le tronçon de diamètre réduit (58) de l'entretoise de butée (44).

9. Poulie de variateur suivant l'une quelconque des revendications 7, 8, caractérisée en ce que, par un épaulement transversal (59), l'entretoise de butée (44) est au contact de la tranche de la douille (18A) du flasque mobile (15A).

10. Poulie de variateur suivant l'une quelconque des revendications 7 à 9, caractérisée en ce que, abstraction faite du moyeu (12A), le logement (47) du joint d'étanchéité (45) se trouve défini par la seule entretoise de butée (44).

11. Poulie de variateur suivant la revendication 1, caractérisée en ce que la collerette (46) de l'entretoise de butée (44) s'étend à l'extrémité libre de celle-ci, en sorte qu'elle constitue par elle-même la portion de cette entretoise de butée (44) par laquelle celle-ci est adaptée à limiter dans un sens le déplacement axial du flasque mobile (15A).

12. Poulie de variateur suivant la revendication 11, caractérisée en ce que, un revêtement en matériau anti-friction (54) étant prévu transversalement, dans le sens axial considéré, en bout de l'équipage formé par le flasque mobile (15A), sa douille (18A) et l'entretoise de butée (44) qui lui est associée, ledit revêtement en matériau anti-friction (54) est porté par la collerette (46) de ladite entretoise de butée (44).

13. Poulie de variateur suivant la revendication 1, caractérisée en ce que la collerette (46) de l'entretoise de butée (44) est constituée par un simple bord tombé de celle-ci.

14. Poulie de variateur suivant la revendication 1, caractérisée en ce que la collerette (46) de l'entretoise de butée (44) est constituée par un bord tombé (46') de celle-ci doublé en surface par un repli sur lui-même (46"), en direction opposée à l'axe de l'ensemble, de ce bord tombé (46').

15. Poulie de variateur suivant l'une quelconque des revendications 1 à 14, caractérisée en ce que le joint d'étanchéité (45) est sous contrainte axiale dans son logement (47).

20                                    0181823

16. Poulie de variateur suivant l'une quelconque des revendications 1 à 15, caractérisée en ce que le joint d'étanchéité (45) s'étend axialement entre le flasque fixe (16A) et le coussinet en matériau anti-friction (19A) axialement le plus proche.

17. Poulie de variateur suivant la revendication 16, caractérisée en ce que, pour l'espace propre au logement du joint d'étanchéité (45) et de l'entretoise de butée (44) entre lui et le coussinet en matériau anti-friction (19A) axialement le plus proche, le flasque fixe (16A) présente successivement, à compter du moyeu (12A), un tronçon droit, un tronçon oblique parallèlement au flasque mobile (15A), et un tronçon oblique de pente inverse de celle du précédent.

FIG.1

1/2

0181823

0181823

FIG.2

FIG.3

FIG.4

FIG.5

**0181823**

Numéro de la demande

**Office européen des brevets**

**RAPPORT DE RECHERCHE EUROPEENNE**

EP 85 40 2204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-2 952 161 (WILLIAMS) * Colonne 3; Figure 1 * | 1-3 | F 16 H 55/56 |
| A | GB-A-2 105 403 (FENNER) * En entier * | 1-3 | |
| A | FR-A-2 197 440 (PATCO) * En entier * | 1-3 | |
| A | FR-A-2 376 347 (FERODO) | | |
| D,A | GB-A-2 140 106 (VALEO) | | |
| | ----- | | |

**DOMAINES TECHNIQUES RECHERCHES (Int. Cl.4)**

F 16 H 55/00
F 16 J 15/00
F 01 L 3/00

Le présent rapport de recherche a été établi pour toutes les revendications

| Lieu de la recherche | Date d'achèvement de la recherche | Examinateur |
|---|---|---|
| LA HAYE | 28-01-1986 | FLORES E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82